# EUROPÄISCHE PATENTSCHRIFT

(11) **EP 0 749 095 B1**
(45) Veröffentlichungstag und Bekanntmachung des Hinweises auf die Patenterteilung: **03.09.2003**
(21) Anmeldenummer: 96109533.8
(22) Anmeldetag: 13.06.1996
(51) Int. Cl.: G06K 19/07, G06K 19/077

(54) **Standardkarte mit eingelagerter Minichipkarte**
Standard card with integrated mini IC card
Carte standard avec mini carte à puce intégrée

(30) Priorität: 14.06.1995 DE 29509736 U
(43) Veröffentlichungstag der Anmeldung: 18.12.1996
(73) Patentinhaber: Giesecke & Devrient GmbH, 81677 München (DE)
(72) Erfinder: Garcia Andres, 08970 Sant Joan Despi(Barcelona), (ES)
(74) Vertreter: Klunker . Schmitt-Nilson . Hirsch

(56) Entgegenhaltungen:
- EP-A- 0 495 216
- EP-A- 0 535 436
- EP-A- 0 617 382
- WO-A-96/31427

## Beschreibung

Die Erfindung betrifft eine Standardkarte mit eingelagerter Minichipkarte, die ein elektronisches Modul enthält und die entlang ihrer Umrißkante durch Schlitze bereichsweise von dem Kartenkörper der Standardkarte getrennt ist und entlang der verbleibenden Umrißkante durch Verbindungsbereiche mit dem Kartenkörper der Standardkarte verbunden ist. Die Erfindung betrifft ferner ein Verfahren zur Herstellung solcher Karten.

Aus der EP 0 453 737 A1 sind bereits Standardkarten mit eingelagerten Minichipkarten bekannt, bei denen die Schlitze, die die Umrißkante der Minichipkarte von dem Kartenkörper der Standardkarte trennen, durch Stanzen erzeugt werden und praktisch entlang der gesamten Umrißkante liegen. Die Minichipkarte bleibt lediglich über schmale Stege mit dem Kartenkörper der Standardkarte verbunden. Hierbei sind die Stege so ausgebildet, daß sie entweder leicht ausbrechbar oder leicht ausstanzbar sind.

Die aus der EP 0 453 737 A1 bekannten eingelagerten Minichipkarten weisen eine hohe Maßhaltigkeit auf, es hat sich jedoch gezeigt, daß die Umrißkanten der Minichipkarten entlang der gestanzten Schlitze Stanzgrate aufweisen. Diese Stanzgrate können bei einer Stapelung der Standardkarten mit eingelagerten Minichipkarten zu Kratzspuren führen. Darüber hinaus kann ein manuelles Herausbrechen der Minichipkarte aus dem Standardkartenkörper wegen des zähen Stegmaterials zu Beschädigungen des elektronischen Moduls führen, zumindest ist aber die Qualität der Umrißkante im Bereich der ausgebrochenen Stege beeinträchtigt. Ein Ausstanzen der Stege hingegen erfordert ein besonderes Werkzeug, das in der Regel vor Ort nicht immer vorhanden ist. Schließlich kann die Minichipkarte, nachdem sie einmal aus dem Standardkartenkörper getrennt wurde, nicht wieder in den Standardkartenkörper eingesetzt und dort fixiert werden.

Aus den o.g. Gründen ist in der EP 0 535 436 A2 bereits vorgeschlagen worden, auf Stege, die die Minichipkarte mit dem Standardkartenkörper verbinden, ganz zu verzichten und die Minichipkarte mit Hilfe eines Klebefilmstreifens in dem Standardkartenkörper zu fixieren. Um eine exakte Position der Minichipkarte in dem Standardkartenkörper zu gewährleisten, wird die Minichipkarte aus dem Standardkartenkörper ausgestanzt, wobei sie zunächst noch über schmale Stege mit dem Standardkartenkörper verbunden bleibt. Danach wird der Klebefilmstreifen so aufgebracht, daß er die Minichipkarte mit dem Standardkartenkörper verbindet, anschließend werden die verbleibenden Stege ausgestanzt.

Durch das Herstellungsverfahren wird ein manuelles Brechen der Stege vermieden, jedoch führt es ebenfalls zu einem Stanzgrat entlang der gesamten Umrißkante der Minichipkarte und damit zu dem o.g. Problem. Darüber hinaus kann die Minichipkarte zwar dem Standardkartenkörper einfach entnommen werden, jedoch ist ein exaktes Wiedereinsetzen der Minichipkarte in den Standardkartenkörper aufgrund fehlender Anschlagpunkte nicht möglich.

Die gleichen Probleme hat eine aus der EP 0 495 216 A2 bekannte Standardkarte mit eingelagerter Minichipkarte. Die dort beschriebene Standardkarte zeigt einen sich über drei von vier Hauptseiten und um die Ecke zur vierten Hauptseite der eingeschlossenen Minichipkarte erstreckenden Schlitz. Der verbleibende Verbindungsbereich an der vierten Hauptseite der Minichipkarte ist durch einseitige oder beidseitige Kerbung als Scharniersteg ausgebiIdet, der ein Ausschwenken der Minichipkarte aus der Standardkarte erlaubt und nach mehreren Lastspielbewegungen abreißt.

Es ist deshalb Aufgabe der Erfindung, eine Standardkarte mit eingelagerter Minichipkarte vorzustellen, bei der die Minichipkarte ohne Hilfsmittel aus der Standardkarte herausgetrennt werden kann, nach dem Heraustrennen eine saubere Umrißkante aufweist und gegebenenfalls wieder in den Standardkartenkörper eingesetzt und in einer exakten Position fixiert werden kann. Es ist ferner Aufgabe der Erfindung, ein Herstellungsverfahren für eine solche Standardkarte mit eingelagerter Minichipkarte vorzustellen.

Die Aufgabe wird bereits durch die gemäß Art. 54 (3) EPÜ zum Stand der technik gehörende Patentanmeldung WO 96/31427 A gelöst. Dort wird vorgeschlagen, die Umrißkante der Minichipkarte durch beidseitiges Einschneiden des Standardkartenkörpers zu erzeugen. Hierbei wird das Kartenmaterial ganz oder bis auf eine verbleibende extrem schmale "Seele" durchtrennt. Die ausgeschnittene Minichipkarte kann somit einerseits ohne Hilfsmittel aus dem Standardkartenkörper herausgetrennt werden. Andererseits löst sich die Minichipkarte nicht alleine aus dem Standardkartenkörper, da beim Einschneiden kein Kartenmaterial entfernt wird und die Minichipkarte deswegen in einer Art Preßpassung im Kartenkörper fixiert bleibt. Über diese Preßpassung läßt sich die herausgetrennte Minichipkarte auch wieder in einer exakten Position in den Standardkartenkörper einsetzen. Schließlich weist die geschnittene Umrißkante der Minichipkarte keine über die Oberfläche hinausragenden Stanzgrate auf.

Es hat sich jedoch gezeigt, daß durch das Schneiden der gesamten Umrißkante zwischen der Minichipkarte und dem Standardkartenkörper Spannungen entstehen, so daß sich beide Karten wölben. Diese Spannungen kommen wohl durch das Eindringen der Schneidmesser in das Kartenmaterial und durch die Materialverdrängung in den Kartenkörpern zustande. Aufgrund der auftretenden Spannungen ist auch ein Wiedereinsetzen der Minichipkarte in den Standardkartenkörper relativ schwierig.

Ausgehend von WO 96/31427A verbleibt also die Aufgabe zu lösen, eine Verformung der Standardkarte mit eingelagerter Minichipkarte zu vermeiden und ein einfaches Wiedereinsetzen in den Standardkartenkörper zu ermöglichen.

Die genannten Aufgaben werden durch die nebengeordneten Ansprüche 1, 8 und 9 gelöst.

Der Grundgedanke der Erfindung ist darin zu sehen, die Verbindungsbereiche zu dem Standardkartenkörper entlang der Umrißkante der Minichipkarte möglichst lang auszubilden und diese Verbindungsbereiche ohne die Entfernung von Kartenmaterial weitgehend oder vollständig zu durchtrennen und die übrigen Bereiche der Umrißkante mit Schlitzen zu versehen. Hierbei ist der Bereich mit den Schlitzen klein im Vergleich zu dem Verbindungsbereich. Vorzugsweise liegen die Schlitze in den Eckbereichen der Umrißkante der Minichipkarte und werden durch Stanzen erzeugt.

Die Vorteile der Erfindung sind insbesondere darin zu sehen, daß einerseits durch die langen Verbindungsbereiche zwischen der Minichipkarte und dem Standardkartenkörper ein ausreichender Halt der Minichipkarte in dem Standardkartenkörepr gewährleistet ist und es andererseits wegen der genannten Schlitze nicht zu unerwünschten Spannungen zwischen der Minichipkarte und dem Standardkartenkörper kommt. Darüber hinaus kann die Minichipkarte einfach und ohne Hilfsmittel manuell aus der Standardkarte herausgetrennt werden, da die Verbindungsbereiche der Minichipkarte weitgehend oder vollständig durchtrennt sind. Die herausgetrennte Minichipkarte weist eine saubere maßhaltige Umrißkante auf, die weitgehend frei von Stanzgraten ist, und kann aufgrund der Preßpassung zum Kartenkörper auch wieder in diesen eingesetzt werden. Hierbei wird das Einsetzen durch die kleinen Schlitze erleichtert. Schließlich kann die Standardkarte mit eingelagerter Minichipkarte in einem Arbeitsgang hergestellt werden.

Ausführungsbeispiele und weitere Vorteile der Erfindung werden im Zusammenhang mit den nachstehenden Figuren beschrieben. Darin zeigt:
- Fig. 1: eine Standardkarte in Aufsicht,
- Fig. 2: einen Ausschnitt aus einer Standardkarte mit eingelagerter Minichipkarte in Aufsicht,
- Fig. 3: einen Querschnitt entlang der in der Fig. 2 gezeigten Linie A-A.

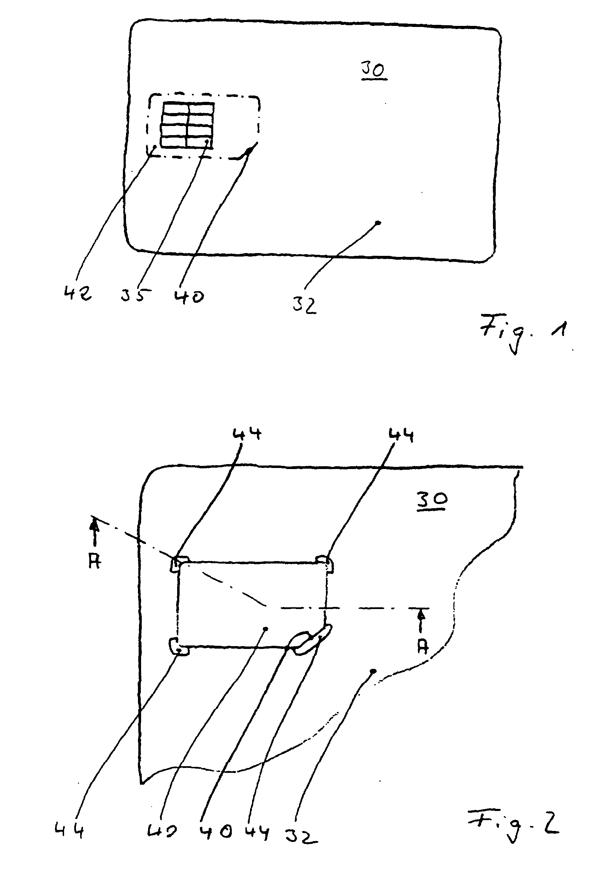

Fig. 1 zeigt eine Standardkarte 30 mit einem elektronischen Modul 35, das in einer Aussparung des Kartenkörpers 32 liegt. Die Abmessungen des Kartenkörpers 32 sind in der ISO-Norm 7810 und die Position des elektronischen Moduls 35 ist in der ISO-Norm 7816/2 festgelegt. In der Fig. 1 ist durch die strichpunktierte Linie die Urnrißkante 40 einer Minichipkarte angedeutet, die, wenn sie bestimmte Abmessungen aufweist, auch als Plug In-Karte bezeichnet wird. Das elektronische Modul 35 liegt in der Minichipkarte 42 und nimmt eine definierte Position zu der Umrißkante 40 ein.

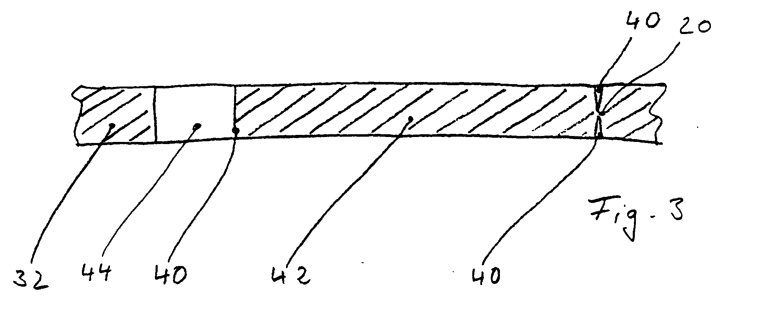

Fig. 2 zeigt vergrößert und nicht maßstabsgetreu den Teilbereich der Standardkarte 30,der die Minichipkarte 42 aufweist. Das elektronische Modul 35 ist wegen der besseren Übersicht und weil es für die nachfolgenden Ausführungen ohne Bedeutung ist, in der Fig. 2 nicht gezeigt. Die Umrißkante 40 der Minichipkarte 42 läßt sich in einen Verbindungsbereich, in dem die Minichipkarte 43 mit dem Standardkartenkörper 32 verbunden bleibt, und in Schlitze 44, die den Verbindungsbereich unterbrechen, unterteilen.

Erfindungsgemäß werden die Verbindungsbereiche möglichst lang ausgebildet und weitgehend oder ganz durchtrennt. Erfindungsgemäß enthalten ferner die Schlitze 44 im Vergleich zu den Verbindungsbereichen nur einen geringen Anteil der Umrißkante 40.

Vorzugsweise nehmen die Verbindungsbereiche nahezu die gesamten Längsund Querseiten der Umrißkante 40 ein und gehen in mindestens einem der Eckbereiche der Umrißkante 40 in die Schlitze 44 über, wie es auch in der Fig. 2 gezeigt ist. Hierbei enden die Verbindungsbereiche jeweils ca. 1 - 3 mm vor den abgerundeten Eckbereichen. Selbstverständlich können die Schlitze 44 auch in anderen Bereichen der Umrißkante 40 liegen.

Die weitgehende oder völlige Durchtrennung der Verbindungsbereiche wird vorzugsweise durch Einschneiden des Kartenmaterials des Standardkartenkörpers 32 herbeigeführt, wobei die Schnittlinie exakt auf der Umrißkante 40 der Minichipkarte 42 liegt. Bei dem Einschneiden wird kein Material aus dem Kartenkörper 32 entfernt, so daß die eingeschnittene Umrißkante 40 der Minichipkarte 42 auch nach dem Einschneiden in Kontakt mit dem Kartenkörper 32 steht und die Minichipkarte 42 in einer Art Preßpassung in dem Standardkörper 32 gehalten wird. Die Schlitze 44 werden hingegen vorzugsweise durch Stanzen erzeugt, wobei Kartenmaterial aus dem Standardkartenkörper 32 entfernt wird, so daß Spannungen zwischen der Minichipkarte und dem Standardkartenkörper vermieden werden. Hierbei hat es sich gezeigt, daß extrem kleine Schlitze ausreichen, um Spannungen zwischen dem Standardkartenkörper und der Minichipkarte zu vermeiden.

Es ist besonders vorteilhaft, die Einschnitte in den Verbindungsbereichen und die Schlitze mit einem Werkzeug zu erstellen, da die Standardkarte 30 dann nur einmal in dem Werkzeug positioniert zu werden braucht und somit die Einschnitte entlang der Umrißkante der Minichipkarte und die Schlitzkanten, die auf der Umrißkante der Minichipkarte liegen, exakt ineinander übergehen. Vorzugsweise werden die Einschnitte und die Schlitze gleichzeitig erzeugt, z. B. mit einer Vorrichtung, wie sie in WO 96/31427A vorgestellt wird, die entsprechend angepaßt ist.

Fig. 3 zeigt stark vergrößert und nicht maßstabsgetreu einen Querschnitt entlang der Linie A-A der Fig. 2. Die Umrißkante 40 ist in den Verbindungsbereichen weitgehend durchgetrennt, was z. B. durch beidseitiges Einschneiden des Kartenmaterials des Kartenkörpers erreicht werden kann. Hierbei ist die Schnittiefe beider Einschnitte vorzugsweise gleich, so daß in der Mitte der Umrißkante 40 eine schmale Seele 20 verbleibt. Die Seele 20 weist eine Dicke von ca. 150 - 450 µm, vorzugsweise 300 µm, auf, so daß die Minichipkarte 43 manuell einfach aus dem Standardkartenkörper herausgetrennt werden kann. Da die durchtrennte Seele mittig auf der Umrißkante liegt und beliebig dünn ausgebildet werden kann, ist die herausgetrennte Minichipkarte also im Verbindungsbereich weitgehend frei von einem Stanzgrat. Es ist auch möglich, den Verbindungsbereich bei der Herstellung der Minichipkarte 42 maschinell ganz zu durchtrennen. In diesem Fall weist die Minichipkarte nach dem Heraustrennen aus dem Standardkartenkörper in den Verbindungsbereichen überhaupt keinen Stanzgrat auf.

Die Verbindungsbereiche von der Minichipkarte 42 zum Standardkartenkörper 32 sind durch die Schlitze 44 unterbrochen, wobei eine Kante der Schlitze mit der Umrißkante 40 der Minichipkarte zusammenfällt, sowie es in der Fig. 3 gezeigt ist. Im Bereich der Schlitze 44 steht die Minichipkarte 42 nicht mit dem Standardkartenkörper 32 in Berührung, so daß Spannungen innerhalb der Minichipkarte 42 vorgebeugt ist und ein Wiedereinsetzen der herausgetrennten Minichipkarte in den Standardkartenkörper 32 erleichtert wird. Da die Schlitze 44 nur einen geringen Teil der Umrißkante 40 einnehmen, können die Stanzgrate, die durch Ausstanzen der Schlitze auf der Umrißkante 40 entstehen, vernachlässigt werden.

## Patentansprüche

1. Standardkarte (30) mit eingelagerter Minichipkarte (42), die ein elektronisches Modul (35) enthält und die entlang ihrer Umrißkante (40) durch Schlitze (44) bereichsweise von dem Kartenkörper (32) der Standardkarte (30) getrennt ist und entlang der verbleibenden Umrißkante durch Verbindungsbereiche mit dem Kartenkörper (32) der Standardkarte (30) verbunden ist, **dadurch gekennzeichnet,daß** die Schlitze (44), bezogen auf die gesamte Umrißkante (40), nur über einen geringen Teil der Umrißkante (40) vorliegen und daß die Verbindungsbereiche entlang der Umrißkante (40) der Minichipkarte (42) quer zur Kartenoberfläche weitgehend oder vollständig derart durchtrennt sind, daß die Minichipkarte (42) durch Preßpassung in dem Standardkartenkörper (32) gehalten wird.

2. Standardkarte (30) mit eingelagerter Minichipkarte (42) nach Anspruch 1, **dadurch gekennzeichnet, daß** die Schlitze (44) nur in den Eckbereichen der Umrißkante (40) vorliegen.

3. Standardkarte (30) mit eingelagerter Minichipkarte (42) nach Anspruch 1 oder 2, **dadurch gekennzeichnet, daß** die Verbindungsbereiche durch beidseitiges Einschneiden weitgehend durchtrennt sind, wobei die Schnittlinien in den Verbindungsbereichen exakt übereinander liegen und durch eine verbleibende "Seele" (20) voneinander getrennt sind.

4. Standardkarte (30) mit eingelagerter Minichipkarte (42) nach Anspruch 2, **dadurch gekennzeichnet, daß** die verbleibende "Seele" (20) zwischen den Schnittlinien eine Dicke von 150 - 450 µm, vorzugsweise 300 µm, aufweist.

5. Standardkarte (30) mit eingelagerter Minichipkarte (42) nach einem der vorhergehenden Ansprüche, **dadurch gekennzeichnet, daß** die Verbindungsbereiche im wesentlichen die gesamten Längs- und Querseiten der Minichipkarte (42) einnehmen.

6. Standardkarte (30) mit eingelagerter Minichipkarte (42) nach einem der vorhergehenden Ansprüche, **dadurch gekennzeichnet, daß** die Verbindungsbereiche bis auf 1 - 3 mm an die abgerundeten Ecken der Minichipkarte (42) heranreichen und dort in die Schlitze (44) übergeben.

7. Standardkarte (30) mit eingelagerter Minichipkarte (42) nach einem der vorhergehenden Ansprüche, **dadurch gekennzeichnet, daß** die Schlitze (44) gestanzt oder gefräst sind.

8. Verfahren zur Herstellung einer Standardkarte (30) mit eingelagerter Minichipkarte (42), die ein elektronisches Modul (35) enthält und die entlang ihrer Umrißkante (40) durch Schlitze (44) bereichsweise von dem Kartenkörper (32) der Standardkarte (30) getrennt ist und entlang der verbleibenden Umrißkante durch Verbindungsbereiche mit dem Kartenkörper (32) der Standardkarte verbunden ist, **dadurch gekennzeichnet, daß** die Verbindungsbereiche entlang der Umrißkante (40) der Minichipkarte (42) quer zur Kartenoberfläche derart weitgehend durchtrennt werden daß die derart durchtrennte Umrißkante (40) der Minichipkarte (42) auch nach dem Durchtrennen in Kontakt mit dem Karten körper(32) steht und durch Schlitze (44) unterbrochen werden, die nur einen geringen Anteil der Umrißkante (40) enthalten.

9. Verfahren zur Herstellung einer Standardkarte mit eingelagerter Minichipkarte (42), die ein elektronisches Modul (35) enthält und die entlang ihrer Umrißkante (40) durch Schlitze (44) bereichsweise von dem Kartenkörper (32) der Standardkarte (30) getrennt ist und entlang der verbleibenden Umrißkante durch Verbindungsbereiche mit dem Kartenkörper (32) der Standardkarte verbunden ist, **dadurch gekennzeichnet, daß** die Verbindungsbereiche entlang der Umrißkante (40) der Minichipkarte (42) vollständig derart durchtrennt werden, daß die Minichipkarte (42) durch Preßpassung in dem Standardkörper (32) gehalten wird und daß die Verbindungsbereiche durch Schlit-ze (44) unterbrochen werden, die nur einen geringen Anteil der Umrißkante (40) enthalten.

10. Verfahren zur Herstellung einer Standardkarte mit eingelagerter Minichipkarte (42) nach einem der Ansprüche 7 und 8, **dadurch gekennzeichnet, daß** die Verbindungsbereiche durch in den Eckbereichen der Umrißkante (40) liegende Schlitze (44) unterbrochen werden.

11. Verfahren zur Herstellung einer Standardkarte mit eingelagerter Minichipkarte (42) nach einem der Ansprüche 8 bis 10, **dadurch gekennzeichnet, daß** die Verbindungsbereiche gleichzeitig mit der Erzeugung der Schlitze (44) weitgehend bzw. vollständig durchtrennt werden.

12. Verfahren zur Herstellung einer Standardkarte mit eingelagerter Minichipkarte (42) nach einem der Ansprüche 8 bis 11, **dadurch gekennzeichnet, daß** die Schlitze (44) gestanzt werden.

## Claims

1. A standard card (30) having an embedded mini chip card (42) that contains an electronic module (35) and is separated along its contour edge (40) from the card body (32) of the standard card (30) in certain areas by slots (44) and connected along the remaining contour edge with the card body (32) of the standard card (30) by connecting areas, **characterized in that** the slots (44) are present only over a small part of the contour edge (40) relative to the total contour edge (40), and the connecting areas are severed largely or completely along the contour edge (40) of the mini chip card (42) at right angles to the card surface such that the mini chip card (42) is held in the standard card body (32) by a press fit.

2. A standard card (30) having an embedded mini chip card (42) according to claim 1, **characterized in that** the slots (44) are present only in the comer areas of the contour edge (40).

3. A standard card (30) having an embedded mini chip card (42) according to claim 1 or 2, **characterized in that** the connecting areas are severed largely by cutting in both sides, the cutting lines in the connecting areas being exactly one above the other and separated from each other by a remaining "core" (20).

4. A standard card (30) having an embedded mini chip card (42) according to claim 2, **characterized in that** the remaining "core" (20) has a thickness of 150 to 450 microns, preferably 300 microns, between the cutting lines.

5. A standard card (30) having an embedded mini chip card (42) according to any of the above claims, **characterized in that** the connecting areas take up substantially the entire long and transverse sides of the mini chip card (42).

6. A standard card (30) having an embedded mini chip card (42) according to any of the above claims, **characterized in that** the connecting areas extend up to 1 to 3 mm from the round corners of the mini chip card (42) and pass into the slots (44) there.

7. A standard card (30) having an embedded mini chip card (42) according to any of the above claims, **characterized in that** the slots (44) are punched or milled.

8. A method for producing a standard card (30) having an embedded mini chip card (42) that contains an electronic module (35) and is separated along its contour edge (40) from the card body (32) of the standard card (30) in certain areas by slots (44) and connected along the remaining contour edge with the card body (32) of the standard card by connecting areas, **characterized in that** the connecting areas are largely severed along the contour edge (40) of the mini chip card (42) at right angles to the card surface such that the thus severed contour edge (40) of the mini chip card (42) is still in contact with the card body (32) after severing, and are interrupted by slots (44) that contain only a small proportion of the contour edge (40).

9. A method for producing a standard card having an embedded mini chip card (42) that contains an electronic module (35) and is separated along its contour edge (40) from the card body (32) of the standard card (30) in certain areas by slots (44) and connected along the remaining contour edge with the card body (32) of the standard card by connecting areas, **characterized in that** the connecting areas are completely severed along the contour edge (40) of the mini chip card (42) such that the thus severed contour edge (40) of the mini chip card (42) is still in contact with the card body (32) after severing, the mini chip card (42) is held in the standard body (32) by a press fit, and the connecting areas are interrupted by slots (44) that contain only a small proportion of the contour edge (40).

10. A method for producing a standard card having an embedded mini chip card (42) according to either of claims 7 and 8, **characterized in that** the connecting areas are interrupted by slots (44) located in the corner areas of the contour edge (40).

11. A method for producing a standard card having an embedded mini chip card (42) according to any of claims 8 to 10, **characterized in that** the connecting areas are severed largely or completely at the same time as the slots (44) are produced.

12. A method for producing a standard card having an embedded mini chip card (42) according to any of claims 8 to 11, **characterized in that** the slots (44) are punched.

## Revendications

1. carte standard (30) munie d'une mini-carte intégrée (42) à puce électronique et qui contient un module électronique (35) et qui est séparée du corps de carte (32) de la carte standard (30) par zones le long de son arête de pourtour (40) par des échancrures (44) et est reliée le long de l'arête de pourtour restante au corps de carte (32) de la carte standard par des zones de liaison,
**caractérisée en ce que** les échancrures (44), rapportées à la totalité de l'arête de pourtour (40) sont présents seulement sur une faible partie de l'arête de bordure (40), et **en ce que** les zones de liaison le long de l'arête de pourtour (40) de la mini-carte à puce (42), transversales à la surface de la carte sont largement ou bien sont complètement séparées de la surface de la carte, de sorte que la muni-carte (42) à puce soit maintenue dans le corps (32) de la carte standard par passage à force selon un ajustement serré.

2. Carte standard (30) munie d'une mini-carte intégrée (42) à puce électronique, selon la revendication 1, **caractérisée en ce que** les échancrures (44) sont présentes seulement dans les zones de coin de l'arête de pourtour (40).

3. Carte standard (30) munie d'une mini-carte intégrée (42) à puce électronique, selon la revendication 1 ou 2, **caractérisée en ce que** les zones de liaison sont séparées des deux côtés largement par découpe par poinçonnement, de sorte que les lignes de découpe dans les zones de liaison se recouvrent exactement et soient séparées l'une de l'autre par une "âme" (20) restante.

4. Carte standard (30) munie d'une mini-carte intégrée (42) à puce électronique, selon la revendication 2, **caractérisée en ce que** l' "âme" restante (20) entre les lignes de coupe présente une épaisseur de 150 à 450 µm, de préférence 300 µm.

5. Carte standard (30) munie d'une mini-carte intégrée (42) à puce électronique, selon l'une des revendications précédentes, **caractérisée en ce que** les zones de liaison comprennent sensiblement la totalité des côtés longitudinaux et transversaux de la mini-carte (42) à puce électronique.

6. Carte standard (30) munie d'une mini-carte intégrée (42) à puce électronique, selon l'une des revendications précédentes, **caractérisée en ce que** les zones de liaison s'étendent jusqu'à 1 à 3 mm des coins arrondis de la mini-carte (42) à puce électronique et s'arrêtent sur les échancrures (44).

7. Carte standard (30) munie d'une mini-carte intégrée (42) à puce électronique, selon l'une des revendications précédentes, **caractérisée en ce que** les échancrures (44) sont découpées par poinçonnement ou bien sont fraisées.

8. Procédé de fabrication d'une carte standard (30) munie d'une mini-carte intégrée (42) à puce électronique et qui contient un module électronique (35) et qui est séparée du corps de carte (32) de la carte standard (30) par zones le long de son arête de pourtour (40) par des échancrures (44) et est reliée le long de l'arête de pourtour restante au corps de carte (32) de la carte standard par des zones de liaison, **caractérisé en ce que** les zones de liaison sont séparées largement le long de l'arête de pourtour (40) de la mini-carte (42) à puce électronique, transversalement à la surface de la carte, de sorte que l'arête de pourtour (40) ainsi séparée de la mini-carte soit encore en contact, après la séparation, avec le corps de carte (32) et que les zones de liaison soient interrompues par les échancrures (44) qui ne contiennent qu'une faible partie de l'arête de pourtour (40).

9. Procédé de fabrication d'une carte standard (30) munie d'une mini-carte intégrée (42) à puce électronique et qui contient un module électronique (35) et qui est séparée du corps de carte (32) de la carte standard (30) par zones le long de son arête de pourtour (40) par des échancrures (44) et est reliée le long de l'arête de pourtour restante au corps de carte (32) de la carte standard par des zones de liaison, **caractérisé en ce que** les zones de liaison sont séparées complètement le long de l'arête de pourtour (40) de la mini-carte (42) à puce électronique, de sorte que la mini-carte (42) à puce soit maintenue dans le corps (32) de la carte standard par pressage à force selon un ajustement serré et de sorte que les zones de liaison soient interrompues par les échancrures (44) qui ne contiennent qu'une faible partie de l'arête de pourtour (40).

10. Procédé de fabrication d'une carte standard munie d'une mini-carte intégrée (42) à puce électronique selon l'une des revendications 7 et 8, **caractérisé en ce que** les zones de liaison sont interrompues par les échancrures (44) se trouvant dans les zones de coin de l'arête de pourtour (40).

11. Procédé de fabrication d'une carte standard munie d'une mini-carte intégrée (42) à puce électronique selon l'une des revendications 8 à 10, **caractérisé en ce que** les zones de liaison sont largement ou complètement séparées au moment même de la fabrication des échancrures (44).

12. Procédé de fabrication d'une carte standard munie d'une mini-carte intégrée (42) à puce électronique selon l'une des revendications 8 à 11, **caractérisé en ce que** les échancrures (44) sont découpées par poinçonnage.
